# EUROPEAN PATENT APPLICATION

(11) **EP 4 763 304 A1**
(43) Date of publication of application: **24.06.2026**
(21) Application number: 25218338.9
(22) Date of filing: 25.11.2025
(51) Int. Cl.: B01D 19/00

(54) **GAS-LIQUID SEPARATOR**

(30) Priority: 17.12.2024 JP 2024220495
(71) Applicant: Danle Co. Ltd., Chigasaki-shi, Kanagawa 253-0061 (JP)
(72) Inventor: Akiyama, Ryo, Chigasaki-shi, Kanagawa, 253-0061 (JP); Takahasi, Shinichi, Chigasaki-shi, Kanagawa, 253-0061 (JP); Mukai, Osamu, Chigasaki-shi, Kanagawa, 253-0061 (JP); Abe, Kazuma, Chigasaki-shi, Kanagawa, 253-0061 (JP)
(74) Representative: Grünecker Patent- und Rechtsanwälte PartG mbB

(57) **Abstract**

An object of the present invention is to provide a gas-liquid separator which can achieve gas-liquid separation performance superior to that of the conventional gas-liquid separator.

A gas-liquid separator (1) comprising a raw water storage chamber (2) of circular cross section for storing gas-liquid mixed raw water, a raw water supply pipe (3) connected to upper part of the raw water storage chamber (2), a deaerated water discharge pipe (4) connected to lower part of the raw water storage chamber (2), a float chamber (5) located above the raw water storage chamber (2) to communicate with the raw water storage chamber (2) through a communication hole (5a), and a float valve (6) accommodated in the float chamber (5) to normally close the float chamber (5) but open the float chamber (5) when gas accumulation in the float chamber (5) reaches a predetermined level, thereby discharging gas in the float chamber (5) to the external environment, wherein a connecting port (2a) of the raw water storage chamber (2) for communication with the raw water supply pipe (3) is directed tangentially to inner surface of circumferential side wall of the raw water storage chamber (2), and the communication hole (5a) between the raw water storage chamber (2) and the float chamber (5) is offset from the cross-sectional center (C) of the raw water storage chamber (2) toward the connecting port (2a) of the raw water storage chamber (2) for communication with the raw water supply pipe (3).

## Description

### Technical Field

The present invention relates to a gas-liquid separator.

### Background Art

Patent Document No.1 discloses a gas-liquid separator comprising a raw water storage chamber of circular cross section for storing gas-liquid mixed raw water, a raw water supply pipe connected to upper part of the raw water storage chamber, a deaerated water discharge pipe connected to lower part of the raw water storage chamber, a float chamber located above the raw water storage chamber to communicate with the raw water storage chamber through a communication hole, and a float valve accommodated in the float chamber to normally close the float chamber but open the float chamber when gas accumulation in the float chamber reaches a predetermined level, thereby discharging gas from the float chamber into the external environment, wherein a connecting port of the raw water storage chamber for communication with the raw water supply pipe is directed tangentially to inner surface of a circumferential side wall of the raw water storage chamber, and the communication hole between the raw water storage chamber and the float chamber is located at the cross-sectional center of the raw water storage chamber.

Operation of the gas-liquid separator is as follows. The float valve closes when water level in the float chamber rises to cause a float forming a part of the float valve to rise and, conversely, the float valve opens when water level in the float chamber descends to cause the float to descend. Water level in the float chamber rises and falls as flow rate of the gas-liquid mixed raw water flowing into the raw water storage chamber increases and decreases. During operation of the gas-liquid separator, the raw water flows into the raw water storage chamber from the raw water supply pipe in tangential direction to the inner surface of the circumferential side wall of the raw water storage chamber to form a swirling flow, and gas bubbles dispersed in the raw water separate and gather in the center of the cross section of the raw water storage chamber under centrifugal separation effect of the swirling flow, thereby forming clustered gas bubbles. The clustered gas bubbles move upward in the raw water, enter the float chamber through the communication hole and gas accumulates in the float chamber, thereby depressing the float chamber water level and lowering the float, whereby the float valve opens to discharge the gas separated from the raw water into the external environment.

### Prior Art Document

### Patent Document

Patent Document No.1: Japanese Patent Laid-Open No. H10-202247

### Disclosure of invention

### Problem to be solved

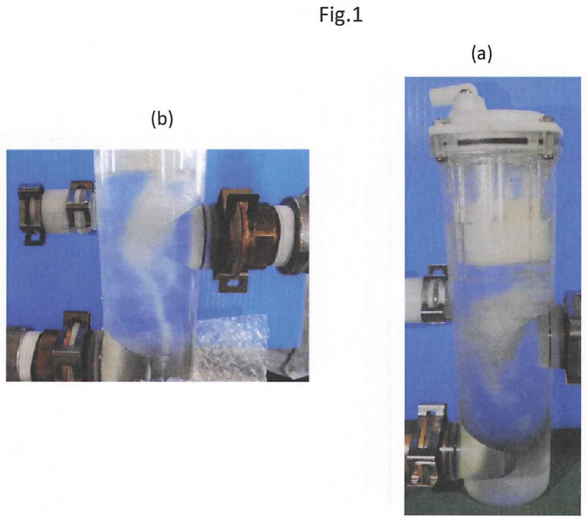

The present application inventors found through earnest research that, as can be seen from Figure 1, the clustered gas bubbles rising in the cross-sectional center region of the raw water storage chamber are biased toward the connecting port of the raw water storage chamber for communication with the raw water supply pipe. Ejecta produced by the raw water flowing into the raw water storage chamber is thought to cause raw water above the connecting port of the raw water storage chamber for communication with the raw water supply pipe to be sucked toward the connecting port together with the clustered gas bubbles rising in the raw water.

In view of the aforesaid research results, it was concluded that the gas-liquid separator of the Patent Document No.1, wherein the communication hole between the raw water storage chamber and the float chamber is located at the cross-sectional center of the raw water storage chamber, cannot guide the clustered gas bubbles rising under bias toward the connecting port of the raw water storage chamber for communication with the raw water supply pipe to the communication hole between the raw water storage chamber and the float chamber, cannot effectively lead the clustered gas bubbles into the float chamber, cannot effectively accumulate gas in the float chamber, and cannot effectively perform gas-liquid separation.

Therefore, an object of the present invention is to provide a gas-liquid separator comprising a raw water storage chamber of circular cross section for storing gas-liquid mixed raw water, a raw water supply pipe connected to upper part of the raw water storage chamber, a deaerated water discharge pipe connected to lower part of the raw water storage chamber, a float chamber located above the raw water storage chamber to communicate with the raw water storage chamber through a communication hole, and a float valve accommodated in the float chamber to normally close the float chamber but open the float chamber when gas accumulation in the float chamber reaches a predetermined level, thereby discharging gas from the float chamber into the external environment, wherein a connecting port of the raw water storage chamber for communication with the raw water supply pipe is directed tangentially to inner surface of a circumferential side wall of the raw water storage chamber, which gas-liquid separator can achieve gas-liquid separation performance superior to that of a conventional gas-liquid separator.

### Means for Achieving the Object

In accordance with the present invention, there is provided a gas-liquid separator comprising a raw water storage chamber of circular cross section for storing gas-liquid mixed raw water, a raw water supply pipe connected to upper part of the raw water storage chamber, a deaerated water discharge pipe connected to lower part of the raw water storage chamber, a float chamber located above the raw water storage chamber to communicate with the raw water storage chamber through a communication hole, and a float valve accommodated in the float chamber to normally close the float chamber but open the float chamber when gas accumulation in the float chamber reaches a predetermined level, thereby discharging gas from the float chamber into the external environment, wherein a connecting port of the raw water storage chamber for communication with the raw water supply pipe is directed tangentially to inner surface of a circumferential side wall of the raw water storage chamber, and the communication hole between the raw water storage chamber and the float chamber is offset from cross-sectional center of the raw water storage chamber toward the connecting port of the raw water storage chamber for communication with the raw water supply pipe.

In the gas-liquid separator in accordance with the present invention, the communication hole between the raw water storage chamber and the float chamber is offset from the cross-sectional center of the raw water storage chamber toward the connecting port of the raw water storage chamber for communication with the raw water supply pipe. Therefore, it can guide the clustered gas bubbles rising under bias toward the connecting port of the raw water storage chamber for communication with the raw water supply pipe to the communication hole between the raw water storage chamber and the float chamber, can effectively lead the clustered gas bubbles into the float chamber, can effectively accumulate gas in the float chamber, can effectively open the float valve, and can effectively discharge gas separated from the raw water to the external environment while suppressing water leakage from the float valve.

In accordance with a preferred aspect of the present invention, longitudinally extending float guide protrusions are provided on inner surface of circumferential side wall of the float chamber at intervals in the circumferential direction.

The float guide protrusions enhance gas discharging effect by promoting smooth movement of the float.

In accordance with a preferred aspect of the present invention, the communication hole between the raw water storage chamber and the float chamber is rectangular-shaped.

A rectangular-shaped communication hole enhances gas discharging effect better than a circular hole.

In accordance with a preferred aspect of the present invention, a section of the rectangular-shaped communication hole periphery present between the raw water storage chamber and the float chamber and closely opposing the inner surface of circumferential side wall of the float chamber is circular-arc-shaped.

The circular-arc-shaped section of the rectangular-shaped communication hole periphery present between the raw water storage chamber and the float chamber and closely opposing the inner surface of circumferential side wall of the float chamber can better enhance gas discharging effect than in the case where the peripheral section is straight.

In accordance with a preferred aspect of the present invention, the circular-arc-shaped section of the rectangular-shaped communication hole periphery present between the raw water storage chamber and the float chamber and closely opposing the inner surface of circumferential side wall of the float chamber does not contact the inner surface of the circumferential side wall of the float chamber.

When the circular-arc-shaped section of the rectangular-shaped communication hole periphery present between the raw water storage chamber and the float chamber closely opposing the inner surface of circumferential side wall of the float chamber contacts the inner surface of the circumferential side wall of the float chamber, gas discharging effect decreases.

In accordance with a preferred aspect of the present invention, ratio of area of the communication hole between the raw water storage chamber and the float chamber to inner diameter area of the upper part of the raw water storage chamber, i.e., area of the communication hole / inner diameter area of the upper part of the raw water storage chamber, is set at 6.5% to 12.7%.

When ratio of area of the communication hole between the raw water storage chamber and the float chamber to inner diameter area of the upper part of the raw water storage chamber, i.e., area of the communication hole / inner diameter area of the upper part of the raw water storage chamber, is set at 6.5% to 12.7%, good effect of reducing water leakage from the float valve and good gas discharge effect are achieved.

### Brief Description of the Drawings

Figure 1 is a set of photographs showing operation of a conventional gas-liquid separator made of transparent material, wherein (a) is an exterior photograph of the whole device and (b) is an exterior photograph focusing on gas bubbles.
Figure 2 is a set of structural views of a gas-liquid separator in accordance with a preferred embodiment of the present invention, wherein (a) is a front view, (b) is a view in the direction of arrows b-b in (a), (c) is a cross sectional view along a cutting line c-c in (a), (d) is a view in the direction of arrows d-d in (a), and (e) is a view in the direction of arrows e-e in (a).
Figure 3 is a block diagram of a testing apparatus for verifying gas discharge ratio.
Figure 4 is a set of top views of bottom plate of the float chamber of the gas-liquid separator, wherein (a) is a top view of a conventional product and (b) to (l) are top views of improved products.

### Modes for Carrying Out the Invention

A gas-liquid separator in accordance with a preferred embodiment of the present invention will be explained.

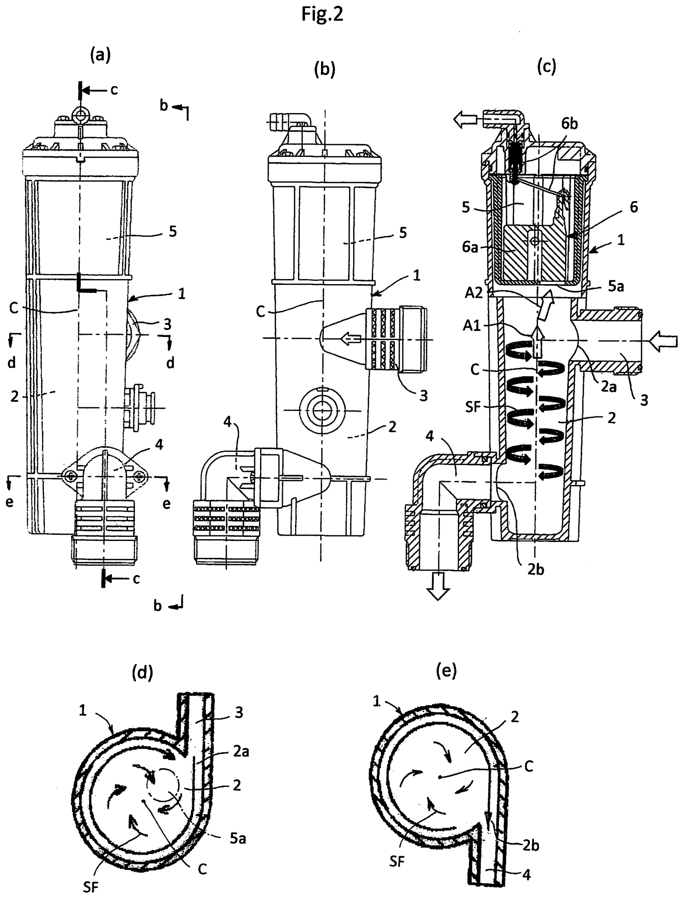

As shown in Figure 2, a gas-liquid separator 1 is equipped with a raw water storage chamber 2 of circular cross section for storing gas-liquid mixed raw water, a raw water supply pipe 3 connected to upper part of the raw water storage chamber 2, a deaerated water discharge pipe 4 connected to lower part of the raw water storage chamber 2, a float chamber 5 located above the raw water storage chamber 2 to communicate with the raw water storage chamber 2 through a communication hole 5a, and a float valve 6 provided with a float 6a and a valve mechanism 6b and accommodated in the float chamber 5 to normally close the float chamber 5 but open the float chamber 5 when accumulation of gas in the float chamber 5 reaches a predetermined level, thereby discharging gas in the float chamber 5 to the external environment.

A connecting port 2a of the raw water storage chamber 2 for communication with the raw water supply pipe 3 is directed tangentially to inner surface of circumferential side wall of the raw water storage chamber 2, and a connecting port 2b of the raw water storage chamber 2 for communication with the deaerated water discharge pipe 4 is directed tangentially to inner surface of circumferential side wall of the raw water storage chamber 2.

The communication hole 5a between the raw water storage chamber 2 and the float chamber 5 is offset from the cross-sectional center C of the raw water storage chamber 2 toward the connecting port 2a of the raw water storage chamber 2 for communication with the raw water supply pipe 3.

Operation of the gas-liquid separator 1 will be described.

As shown in Fig.2(a) to Fig.2(e), the raw water flows into the raw water storage chamber 2 from the raw water supply pipe 3 tangentially to the inner surface of the circumferential side wall of the raw water storage chamber 2 to form a swirling flow SF, and gas bubbles dispersed in the raw water gather in the center region of the circular cross section of the raw water storage chamber 2 under centrifugal separation effect of the swirling flow SF to form a cluster of gas bubbles. As indicated by blank arrow A1 in Fig.2(c), the clustered gas bubbles move upward in the raw water near the cross-sectional center of the raw water storage chamber 2.

Due to ejecta produced by the raw water flowing into the raw water storage chamber 2 from the raw water supply pipe 3, the raw water above the connecting port 2a of the raw water storage chamber 2 for communication with the raw water supply pipe 3 is sucked toward the connecting port 2a while accompanied by the clustered gas bubbles rising in the raw water near the cross-sectional center of the raw water storing chamber 2. Thus, as indicated by blank arrow A2 in Fig.2(c), the clustered gas bubbles are biased toward the connecting port 2a of the raw water storage chamber 2 for communication with the raw water supply pipe 3.

As the communication hole 5a between the raw water storage chamber 2 and the float chamber 5 is offset from the cross-sectional center C of the raw water storage chamber 2 toward the connecting port 2a of the raw water storage chamber 2 for communication with the raw water supply pipe 3, the clustered gas bubbles biased toward the connecting port 2a gather beneath the communication hole 5a, enter the float chamber 5 through the communication hole 5a, so that the gas accumulates in the float chamber 5. The accumulated gas depresses water level in the float chamber 5 and lowers the float 6a. When volume of accumulated gas in the float chamber 5 reaches a predetermined level, the float valve 6 opens under the operation of the valve mechanism 6b to discharge gas into the external environment.

In the gas-liquid separator 1, as can be seen from the above explanation, the communication hole 5a between the raw water storage chamber 2 and the float chamber 5 is offset from the cross-sectional center C of the raw water storage chamber 2 toward the connecting port 2a of the raw water storage chamber 2 for communication with the raw water supply pipe 3. Therefore, the gas-liquid separator 1 can guide the clustered gas bubbles rising under bias toward the connecting port 2a of the raw water storage chamber 2 for communication with the raw water supply pipe 3 to the communication hole 5a between the raw water storage chamber 2 and the float chamber 5, can effectively lead the clustered gas bubbles into the float chamber 5, can effectively accumulate gas in the float chamber 5, and can effectively open the float valve 6, thereby effectively discharging gas separated from the raw water to the external environment while suppressing water leakage from the float valve 6.

When the communication hole 5a is too small, the gas is restricted from flowing into the float chamber 5, and amount of the discharged gas decreases. On the other hand, when the communication hole 5a is too large, operation of the float 6a is disturbed by turbulent flow of the raw water in the raw water storage chamber 2 and becomes unstable, so that the float valve 6, which has been closed, opens, and raw water leaks through the float valve 6. A number of trial products of the gas-liquid separator 1 having communication holes 5a differing in area, location and shape were therefore made, and their gas discharging efficiencies and maximum raw water flow rates capable of preventing water leakage were measured to determine the best communication hole 5a configuration for simultaneously achieving good gas discharge efficiency and strong prevention of water leakage. Test conditions were as follows.

### 1. Water leakage test

### (1)Testing method

Water was supplied to the raw water supply pipe 3 of the trial product of the gas-liquid separator 1 for 150-second periods at a predetermined water pressure and at various different flow rates, and flow rate which caused water leakage from the float valve 6 was determined.

### (2)Test conditions

(a)Applied pressure: 300kPa (Value chosen taking into consideration that in a storage type water heater to be installed with the gas-liquid separator 1, internal pressure of a circulation passage connecting a heat source unit having a heat pump and a hot water storage unit having a hot water storage tank can be expected to be lower than 300kPa at maximum).
(b)Water flow rate: Water flow rate was incremented in 5L/min steps from 45L/min to 70L/min, and presence or absence of leakage of water was monitored at each flow rate (Values chosen taking into consideration that the flow rate of hot water in the aforesaid circulation passage is 50 to 65L/min).
(c)Decision criteria: Maximum water flow rate at which water leakage can be prevented (termed "allowable water flow rate" in the following description) equal to or greater than 65L/min (Value chosen taking into consideration that the maximum flow rate of hot water in the aforesaid circulation passage is 65L/min).

### 2. Gas discharge ratio test

### (1)Testing device

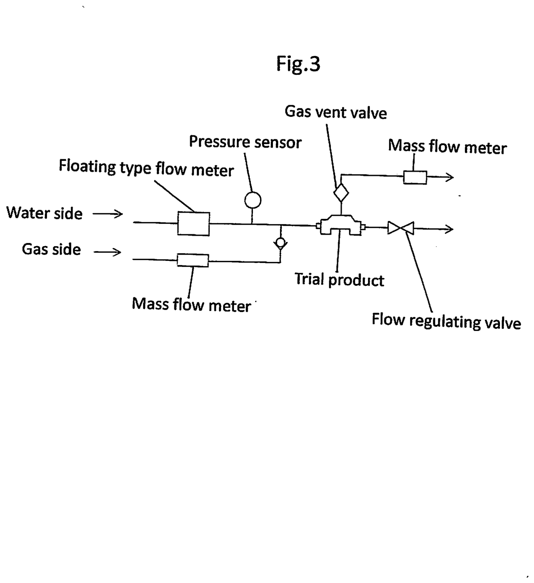

A block diagram of the testing device is shown in Fig. 3

### (2)Testing method

Gas-liquid mixed water of predetermined pressure, water flow rate and inflow rate of air was supplied to the raw water supply pipe 3 of a trial product of the gas-liquid separator 1 and flow rate of air discharged from the float valve 6 was measured and used to determine air discharge ratio (flow rate of discharged air / inflow rate of air).

### (3)Test conditions

(a) Used gas: Air
(b) Applied pressure: 300kPa
(c) Water flow rate: 50L/min
(d) Inflow rate of air: 30NL/min (Value chosen taking into consideration that the flow rate of refrigerant gas, a gas possibly mixed into the hot water in the aforesaid circulation passage, can be expected to be less than 30NL/min at maximum.
(e)Decision criteria: Air discharge ratio equal to or greater than 90%.

### 3. Test results

### (1)Water leakage test

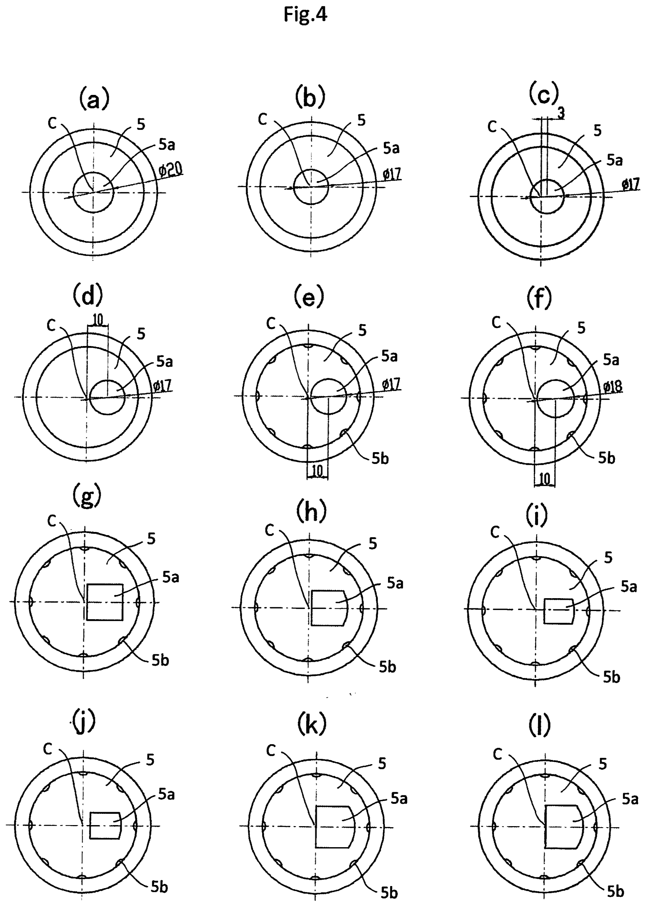

Taking into consideration that ratio of the area of the circular communication hole between the raw water storage chamber and the float chamber to the inner diameter area of the upper part of the raw water storage chamber, i.e., area of the circular communication hole / the inner diameter area of the upper part of the raw water storage chamber (hereinafter called area ratio of the communication hole), of conventional gas-liquid separators (defined as gas-liquid separators having the same structure as that of the gas-liquid separator 1 other than for the communication hole between the raw water storage chamber and the float chamber being located at the cross-sectional center of the raw water storage chamber, more specifically, area center of gravity of the circular communication hole, i.e., the center of the circular communication hole, being located at the cross-sectional center of the raw water storage chamber) that are installed in hot water storage type water heaters having heat pumps is about 12%, the gas-liquid separator 1 was modified to a conventional gas-liquid separator by locating the circular communication hole 5a at the cross-sectional center C of the raw water storage chamber and setting the area ratio of the circular communication hole at 12%(a circular hole of 20mm diameter). The conventional gas-liquid separator obtained by modifying the gas-liquid separator 1 is shown in Fig.4(a). A water leakage test was carried out on the conventional gas-liquid separator of Fig.4(a). The allowable water flow rate was 45L/min and did not reach the lower limit flow rate 50L/min of hot water in the circulation passage of a storage type water heater having a heat pump in which the gas-liquid separator 1 was to be installed. Taking the above result into consideration, an improved product 1 (Fig.4(b)) was made by locating the communication hole at the cross-sectional center of the raw water storage chamber and setting the area ratio of the communication hole at 8.7% (a circular hole of 17mm diameter). A water leakage test was carried out on the improved product 1. The allowable water flow rate increased to 55L/min and settled within the flow rate range 50 to 65L/min of hot water in the circulation passage of the storage type water heater having a heat pump in which the gas-liquid separator 1 was to be installed.

### (2)Water leakage reduction and gas discharge ratio enhancement test 1

Taking the results of the water leakage test into consideration, the improved product 1 (Fig.4(b)) was further improved according to the present invention.

Area ratio of the communication hole was fixed at 8.7% (a circular hole of 17mm diameter). An improved product 2 (Fig.4(c)) wherein the communication hole was offset from the cross-sectional center C of the raw water storage chamber 2 toward the connecting port 2a of the raw water storage chamber 2 for communication with the raw water supply pipe 3 by 3mm, and an improved product 3 (Fig.4(d)) wherein the communication hole was offset from the cross-sectional center C of the raw water storage chamber 2 toward the connecting port 2a of the raw water storage chamber 2 for communication with the raw water supply pipe 3 by 10mm were made. Allowable water flow rate and air discharge ratio of aforesaid three improved products were measured.

Allowable water flow rate and air discharge ratio of the improved product 1 were 55L/min and 62.9%. Allowable water flow rate and air discharge ratio of the improved product 2 were 60L/min and 65.2%. Allowable water flow rate and air discharge ratio of the improved product 3 were 65L/min and 68.5%.

An improved product 4 (Fig.4(e)) was made which had the same communication hole configuration as the improved product 3 and was further provided on inner surface of circumferential side wall of the float chamber 5 with circumferentially spaced longitudinally extending float guide protrusions 5b. Allowable water flow rate and air discharge ratio of the aforesaid improved product 4 were measured. Allowable water flow rate stayed at 65L/min, the same level as with the improved product 3, and air discharge rate became 73.4%, larger than that of the improved product 3.

### (3)Water leakage reduction and gas discharge ratio enhancement test 2

Taking the results of the water leakage reduction and gas discharge ratio enhancement test 1 into consideration, the improved product 4(Fig.4(e)) was further improved. The circumferentially spaced arrangement of the longitudinally extending float guide protrusions 5b on the inner surface of circumferential side wall of the float chamber 5 was maintained. An improved product 5 (Fig.4(f)) wherein the communication hole 5a was offset from the cross-sectional center C of the raw water storage chamber 2 toward the connecting port 2a of the raw water storage chamber 2 for communication with the raw water supply pipe 3 by 10mm and the area ratio of the communication hole was increased to 9.8% (a circular hole of 18mm diameter), an improved product 6 (Fig.4(g)) wherein the area ratio of the communication hole was set at 10% (almost the same as that of the improved product 5), location of the communication hole (location of area center of gravity) was set at almost the same as that of the improved product 5 and the communication hole was made almost square, and an improved product 7 (Fig.4(h)) wherein the section of the periphery of the square-shaped communication hole of the improved product 6 closely opposing the inner surface of the circumferential side wall of the float chamber was made circular arc-shaped were made. The area ratio of the communication hole of the improved product 7 was 9.9%. Allowable water flow rate and air discharge ratio of the aforesaid three improved products were measured.

The allowable water flow rates of the three improved products maintained the same 65L/min level as the improved product 4. Air discharge ratios of the improved products 5, 6 and 7 increased to 85.4%, 95.0% and 95.0%, respectively.

3D-CAD fluid analysis carried out in parallel with the water leakage reduction and gas discharge ratio enhancement test 2 showed that water flow speed in the raw water storage chamber 2 was slower at the communication hole of the improved product 6 than at that of the improved product 5 and that water flow speed in the raw water storage chamber 2 was slower at the communication hole of the improved product 7 than at that of the improved product 6. It is thought that entrance of the clustered air bubbles is facilitated when water flow speed in the raw water storage chamber 2 at the communication hole becomes slow. Therefore, superiority of the improved product 6 to the improved product 5 and superiority of the improved product 7 to the improved product 6 were supported by the fluid analysis from the viewpoint of enhancing the gas discharge ratio.

Moreover, the fluid analysis showed that water flow speed in the raw water storage chamber 2 at the communication hole increases when the circular-arc-shaped peripheral section of the square-shaped communication hole of the improved product 7 contacts the inner surface of the circumferential side wall of the float chamber. Since it is thought that entrance of the clustered air bubbles is impeded when water flow speed in the raw water storage chamber 2 at the communication hole becomes high, the circular-arc-shaped peripheral section of the square-shaped communication hole is desirably separated from the inner surface of the circumferential side wall of the float chamber from the viewpoint of enhancing the gas discharge ratio.

### (4)Water leakage reduction and gas discharge ratio enhancement test 3

Taking the results of the of water leakage reduction and gas discharge ratio enhancement test 2 into consideration, the improved product 7 (Fig.4(h)) was further improved. The location and shape of the communication hole were maintained similar to those of the improved product 7. An improved product 7-A (Fig.4(i)) wherein the area ratio of the communication hole 5a was decreased to 6.1%, an improved product 7-B (Fig.4(j)) wherein the area ratio of the communication hole 5a was decreased to 6.5%, an improved product 7-C (Fig.4(k)) wherein the area ratio of the communication hole 5a was increased to 12.7%, and an improved product 7-D (Fig.4(l)) wherein the area ratio of the communication hole 5a was increased to 13.3% were made. Allowable water flow rate and air discharge ratio of aforesaid four improved products were measured.

In comparison with the improved product 7, the allowable water flow rate increased to 70L/min while the air discharge ratio decreased to 84.7% in the improved product 7-A, the allowable water flow rate increased to 70L/min while the air discharge ratio decreased to 90.0% in the improved product 7-B, the allowable water flow rate stayed at 65L/min and the air discharge ratio stayed at 95% in the improved product 7-C, and the allowable water flow rate decreased to 60L/min while the air discharge ratio stayed at 95% in the improved product 7-D.

When subjected to the water leakage reduction and gas discharge ratio enhancement test 3, the improved products 7, 7-B and 7-C were found to fulfill the decision criteria of the gas discharge ratio test and the water leakage test and enable simultaneous achievement of excellent gas discharge ratio and water leakage reduction. Industrial Applicability of the Invention

The gas-liquid separator according to the present invention can be widely used as gas-liquid separators.

Although this invention has been disclosed in the context of certain preferred embodiments, it will be understood by those skilled in the art that the present invention extends beyond the specifically disclosed embodiments and obvious modifications and equivalents thereof. Thus, it is intended that the scope of the present invention should be determined only by a fair reading of the claims.

### Explanation of reference numerals

1 Gas-liquid separator
2 Raw water storage chamber
2a Connection port of raw water storage chamber for communication with raw water supply pipe
2b Connection port of raw water storage chamber for communication with deaerated water discharge pipe
3 Raw water supply pipe
4 Deaerated water discharge pipe
5 Float chamber
5a Communication hole
5b Float guide protrusions
6 Float valve
6a Float
6b Valve mechanism
A1, A2 Flow of bubbles
C Cross-sectional center of raw water storage chamber
SF Swirling flow

## Claims

1. A gas-liquid separator comprising a raw water storage chamber of circular cross section for storing gas-liquid mixed raw water, a raw water supply pipe connected to upper part of the raw water storage chamber, a deaerated water discharge pipe connected to lower part of the raw water storage chamber, a float chamber located above the raw water storage chamber to communicate with the raw water storage chamber through a communication hole, and a float valve accommodated in the float chamber to normally close the float chamber but open the float chamber when gas accumulation in the float chamber reaches a predetermined level, thereby discharging gas in the float chamber to the external environment, wherein a connecting port of the raw water storage chamber for communication with the raw water supply pipe is directed tangentially to inner surface of circumferential side wall of the raw water storage chamber, and the communication hole between the raw water storage chamber and the float chamber is offset from the cross-sectional center of the raw water storage chamber toward the connecting port of the raw water storage chamber for communication with the raw water supply pipe.

2. A gas-liquid separator of claim 1, wherein longitudinally extending float guide protrusions are provided on inner surface of circumferential side wall of the float chamber at intervals in the circumferential direction.

3. A gas-liquid separator of claim 1, wherein the communication hole between the raw water storage chamber and the float chamber is rectangular-shaped.

4. A gas-liquid separator of claim 3, wherein a section of the rectangular-shaped communication hole periphery present between the raw water storage chamber and the float chamber and closely opposing the inner surface of circumferential side wall of the float chamber is circular-arc-shaped.

5. A gas-liquid separator of claim 4, wherein the circular-arc-shaped section of the rectangular-shaped communication hole periphery present between the raw water storage chamber and the float chamber and closely opposing the inner surface of circumferential side wall of the float chamber does not contact the inner surface of the circumferential side wall of the float chamber.

6. A gas-liquid separator of claim 5, wherein ratio of area of the communication hole between the raw water storage chamber and the float chamber to inner diameter area of the upper part of the raw water storage chamber, i.e., area of the communication hole / inner diameter area of the upper part of the raw water storage chamber, is set at 6.5% to 12.7%.
